# EUROPÄISCHE PATENTSCHRIFT

(11) **EP 2 028 730 B1**
(45) Veröffentlichungstag und Bekanntmachung des Hinweises auf die Patenterteilung: **20.07.2011**
(21) Anmeldenummer: 07291043.3
(22) Anmeldetag: 24.08.2007
(51) Int. Cl.: H01R 35/02, B60R 16/027

(54) **Vorrichtung zur Signal- bzw. Stromübertragung zwischen Endstellen**
Device for signal and current transmission between terminals
Dispositif de transmission de signal ou de courant entre des terminaux

(43) Veröffentlichungstag der Anmeldung: 25.02.2009
(73) Patentinhaber: Nexans, 75008 Paris (FR)
(72) Erfinder: Pedimonte, Andreas, 92637 Weiden (DE); Schröer, Frank, 92637 Weiden (DE)
(74) Vertreter: Döring, Roger

(56) Entgegenhaltungen:
- EP-A- 0 675 576
- DE-A1- 4 236 279
- DE-C- 762 492
- GB-A- 983 411
- US-A- 4 838 803

## Beschreibung

Die Erfindung bezieht sich auf eine Vorrichtung (EP 0 735 632 B1) gemaß dem Oberbegriff des Patentanspruchs 1.

Eine derartige Vorrichtung wird beispielsweise zur Stromzuführung und/oder Signalzuführung an bewegliche Teile eines Kroftfahrzeugs benötigt. Sie kann dazu beispielsweise im Lenkrad eines Kraftfahrzeugs, aber auch an anderer Stelle eingesetzt werden, wie beispielsweise in einem Lenkgetriebe. Die wesentliche Aufgabe dieser Vorrichtung ist die Übertrogung von Strom und/oder Signalen zwischen feststehenden und beweglichen Tellen ohne den Einsatz von schleifenden Kontakten.

Bel der Vorrichtung nach der eingangs erwähnten EP 0 735 632 B1 ist die gewickelte Flachband-Leitung - im folgenden kurz "FBL" genannt - in einen inneren und einen äußeren Wickelbereich aufgeteilt, In denen die Windungen unterschiedliche Wickelrichtung hoben. Die beiden Wickelbereiche der hier als Flachleiter-Bandleitung ausgeführten FBL sind durch eine etwa U-förmige Umkehrstelle miteinander verbunden. Zwischen den beiden Wickelbereichen liegt ein die Umkehrstelle durchlassender, ringförmiger Führungskörper, der in Umfangsrichtung der Kassette bewegbar ist. Er wird durch die gewickelte FL-BL bzw. durch deren Umkehrstelle bewegt, wenn der Rotor der Kassette gedreht wird. Der Führungskörper dient einerseits der Führung der FBL beim Auf- und Abwickeln der Wickelbereiche und andererseits als Abstandshalter zwischen den beiden Wickelbereichen, damit deren Windungen nicht zusammenfallen.

Die bekannte Vorrichtung nach der EP 0 556 779 B1 arbeitet ohne einen solchen Führungskörper für die Wickelbereiche der FBL. In der Kassette dieser Vorrichtung sind statt dessen mehrere FBLen angeordnet, von denen jede zwei durch eine U-förmige Umkehrstelle verbundene Wickelbereiche aufweist. Dabei liegt Jede FBL mit einer größeren Länge einerseits am Rotor und andererseits am Stator der Kassette an. Die FBLen sind in Umfangsrichtung der Kassette versetzt und stützen sich bei einer ausreichenden Anzahl gegenseitig derart ab, daß ihre Windungen auch ohne zusätzlichen Stützkörper nicht zusammenfallen können.

Bei den beiden bekannteh Vorrichtungen sind ebenso wie bei allen anderen Vorrichtungen dieser Bauart mit einer Aufteilung der FBL In zwei Wickelbereiche Maßnahmen erforderlich, um die Windungen der FBLen in ihren beiden Wickelbereichen so zu stabilisieren, daß dieselben nicht zusammenfallen.

Der Erfindung liegt die Aufgabe zugrunde, die eingongs geschilderte Vorrichtung so zu gestalten, daß sie unabhängig von der Anzahl der In der Kassette enthaltenen FBLen ohne gesondertes Stützelement auskommt.

Diese Aufgabe wird gemäß den kennzeichnenden Merkmalen des Patentanspruchs 1 gelost.

Bei dieser Vorrichtung ist In der Kassette mindestens eine FBL eingesetzt, die weiterhin einerseits gut biegbar und andererseits so stabilisiert ist, daß sie In der Umkehrstelle Ihre gebogene Form aus sich heraus, ohne gesondertes Stützelement nicht nur beibehält, sondern die Windungen der beiden von der Umkehrstelle ausgehenden Wickelbereiche spreizt bzw. nach außen drückt, In Richtung des Rotors einerseits und des Stators andererseits. Die FBL ist daher besonders für Kassetten mit wenigen FBLen, also auch nur einer FBL, geelgnet, die in zwei durch eine Umkehrstelle verbundene Wickelbereiche aufgeteilt sind (ist). Sie bleibt trotz guter Biegbarkeit nicht nur an der Umkehrstelle stabil gebogen, sondern auch die Windungen ihrer Wickelbereiche liegen ohne gesonderte Stützelemente ausreichend fest am Stator einerseits und am Rotor andererseits an. Durch die geschilderte Stabilislerung der FBL und den Fortfall von gesonderten Stützelementen ergibt sich der weitere Vorteil, daß die FBL in der Umkehrstelle auch um kleinere Radien gebogen werden kann. Der Wickelraum in der Kassette kann dadurch in seinen radialen Abmessungen verkleinert werden, so daß auch die Kassette insgesamt kleinere Abmessungen erhalten kann. Eine Maßnahme zur Erhöhung der Biegefestigkeit der FBL ist der Einsatz einer speziellen Legierung mit federnden Eigenschaften für zumindest einen Teil der Leiter. Es ist auch möglich, neben den Leitern zusätzliche Federelemente einzusetzen, die parallel und mit Abstand zu den Leitern verlaufen.

Ausführungsbeispiele des Erfindungsgegenstandes sind In den Zeichnungen dargestellt.

Es zeigen:
Fig. 1 eine Ansicht einer Kassette für die Vorrichtung nach der Erfindung in schematischer Darstellung.
Fig. 2 eine gegenüber Fig. 1 ergänzte Ausführungsform einer in der Vorrichtung verwendbaren Kassette.
Fig. 3 und 4 in schematischer Darstellung unterschiedlich aufgebaute, in einer Kassette verwendbare Leitungen.

Aufbau und Anordnung einer Vorrichtung mit einer beispielsweise im Lenkrad eines Fahrzeugs zu montierenden Kassette sind grundsätzlich bekannt und beispielsweise in den eingangs erwähnten Schriften beschrieben. Auf entsprechende Einzelheiten wird deshalb hier nicht weiter eingegangen. Statt des Wortes "Vorrichtung" wird im folgenden der Einfachheit halber das Wort "Kassette" verwendet.

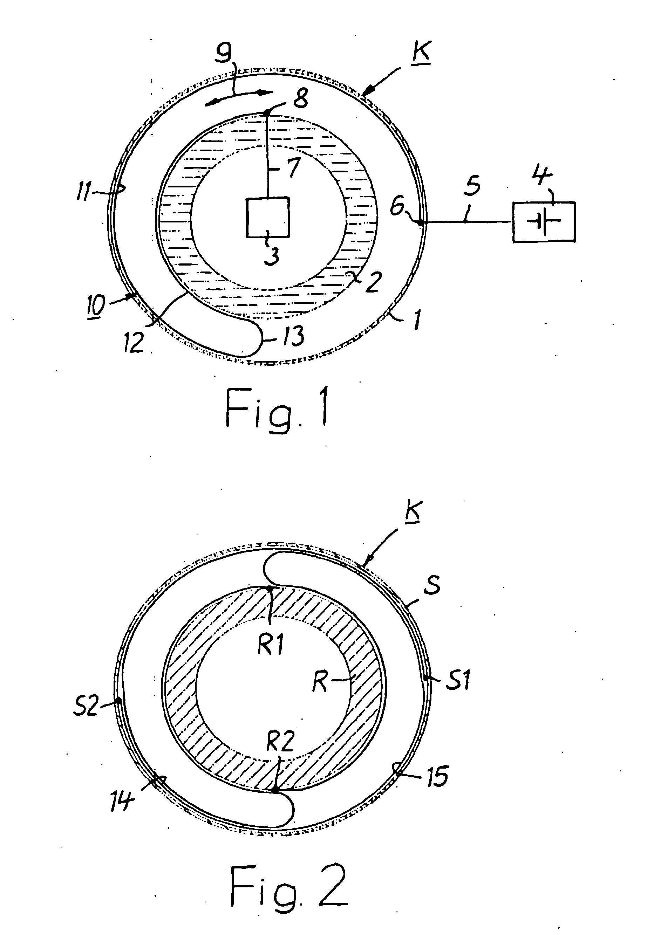

In Fig. 1 sind schematisch zwei beispielsweise kreisförmig ausgebildete, konzentrisch angeordnete Wände 1 und 2 einer Kassette K dargestellt. Die Wand 1 gehört beispielsweise zum Stator der Kassette K, während die Wand 2 zu deren Rotor gehört. Die Kassette K ist für den Einbau In das Lenkrad eines Kraftfahrzeugs bestimmt. Zur Stromversorgung einer Elektronik 3, durch deren Signal ein Airbog ausgelöst werden kann, ist die Kassette K an eine Spannungsquelle 4 des Kraftfahrzeugs angeschlossen. Die Spannungsquelle 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Zwischen den beiden Endstellen 6 und 8 ist eine FBL 10 mit mindestens zwei elektrischen Leitern angebracht. Die FBL 10 ist in bevorzugter Ausführungsform als Flachleiter-Bandleitung mit flachen bzw. rechteckigen Leitern ausgeführt. Eine solche Leitung ist insgesamt relativ dünn und nimmt auch dann wenig Platz ein, wenn sie in mehreren, nebeneinander liegenden Windungen verläuft.

Die FBL 10 ist gemäß Fig. 1 in der Kassette K in Windungen angeordnet, die in einen äußeren Wickelbereich 11 und einen inneren Wickelbereich 12 aufgeteilt sind. Sie umfassen in einer aus Fig. 1 ersichtlichen Mittelstellung bzw. in der Montageposition der Kassette K jeweils mindestens eine Windung. In den beiden Wickelbereichen 11 und 12 haben die Windungen der FBL 10 entgegengesetzte Wickeirichtungen. Sie liegen einerseits am Stator (Wand 1) und andererseits am Rotor (Wand 2) der Kassette K an Die Wickelbereiche 11 und 12 sind durch eine etwa U-förmig ausgeführte Umkehrstelle 13 der FBL 10 miteinander verbunden.

Bei einer Drehung des Lenkrads eines Fahrzeugs, in welches die Kassette K angebaut ist, wird deren Rotor in Richtung des Doppelpfeiles 9 mitgedreht. Der Rotor nimmt über die Endstelle 8 die angeschlossene FBL 10 mit, so daß deren Umkehrstelle 13 in Umfangsrichtung der Kassette K hin und her wandert.

Die FBL 10 hat eine erhöhte elastische Biegefestigkeit, so daß ihre Spreizkraft im Bereich der Umkehrstelle 13 so weit erhöht ist, daß ihre Windungen in den Wickelbereichen 11 und 12 durch die FBL 10 selbst ständig noch außen gedrückt werden, in Richtung des Stators (Wand 1) einerseits und des Rotors (Wand 2) andererseits. Dieser vorteilhafte Aufbau der FBL 10 läßt auch kleinere Biegeradien In der Umkehrstelle 13 zu, unter Beibehalt der erhöhten Spreizkraft der FBL 10. Der Abstand zwischen Stator und Rotor kann dadurch verringert werden, so daß auch die Außenabmessungen der Kassette K verkleinert werden können.

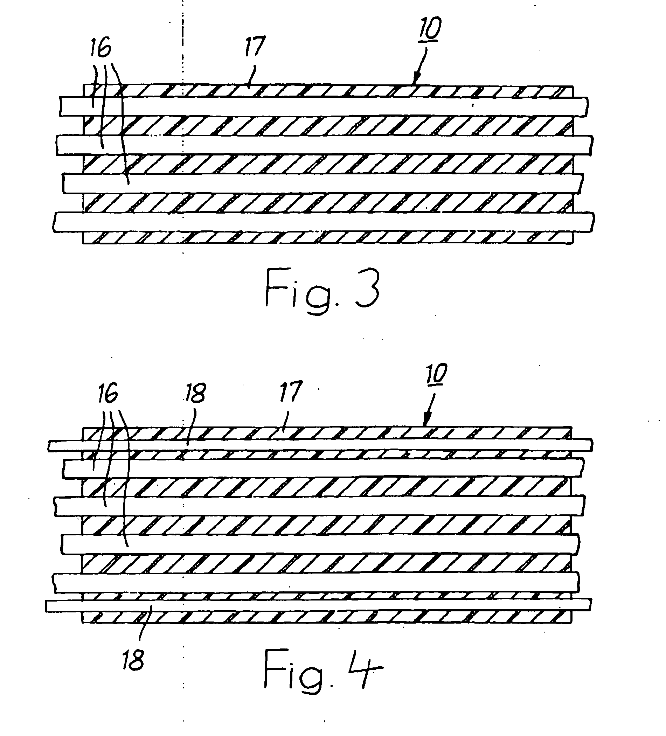

Die erhöhte elastische Biegbarkeit der FBL 10 kann in einer ersten Ausführungsform durch den Einsatz von geeigneten Materialien für die Leiter 16 (Fig. 3 und 4) der FBL 10 erreicht werden. Dazu können die Leiter 16 aus einem federnden, elektrisch gut leitenden Material hergestellt werden, mit Vorzug aus einer federnden Kupferlegierung. Bei FBLen mit einer größeren Anzahl von Leitern 16 kann es ausreichen, wenn nur ein Teil derselben die federnden und die im folgenden angegebenen Eigenschaften hat. Die restlichen Leiter können dann in herkömmlicher Ausführung aufgebaut sein.

Die Leiter 16 der FBL 10 mit den erwähnten speziellen Eigenschaften können auch aus einer Eisen-Kobalt-Nickel-Legierung bestehen. Geeignet ist auch eine unter der Bezeichnung C155 bekannte Kupferleglerung mit geringen Mengen von Zinh, Magnesium, Silber und Phosphor als Zusätzen. Die Leiter 16 können auch aus einer als Neusilber bezeichneten Kupfer-Nickel-Legierung bestehen. Schließlich können auch aus Messing oder Bronze bestehende Leiter 16 eingesetzt werden.

Der zu Fig. 1 beschriebene Sachverhalt gilt auch für eine Vorrichtung nach Fig. 2. welche eine Kassette K mit zwei FBLen 14 und 15 zeigt, deren Endstellen S1 und S2 sowie R 1 und R2 um 180° gegeneinander versetzt am Stator einerseits und am Rotor andererseits angeordnet sind. Die Endstellen des Rotors einerseits und des Stators andererseits sind in praktischer Ausführung jeweils an einer Stelle beispielsweise in einem Teil eines Steckverbinders zusammengefaßt, damit weiterführende Leitungen beispielsweise mittels eines Steckers angeschlossen werden können.

Eine Kassette K kann auch mit mehr als zwei FBLen bestückt sein, die zweckmäßig mit gleichem Abstand zueinander in Umfangsrichtung der Kassette K gegeneinander versetzt sind.

Eine FBL 10 bzw. alle in einer Kassette K eingebauten FBLen ist bzw. sind beispielsweise entsprechend den Fig. 3 und 4 aufgebaut:

Die FBL 10 hat beispielsweise vier parallel und mit Abstand zueinander verlaufende elektrische Leiter 16, die unverrückbar in eine gemeinsame Isolierung 17 eingebettet sind. Es sollen mindestens zwei Leiter 16 in der FBL 10 vorhanden sein. Es können aber auch mehr als vier Leiter 16 sein, Die Leiter 16 können auch unterschiedliche Abmessungen haben. Sie bestehen mit Vorteil aus den oben angegebenen Materiallen.

Gemaß Fig 4 konnen in einer zweiten Ausführungsform zusätzlich zu den Leitern 16 beispielsweise zwei Federelemente 18 mit in die Isolierung 17 eingebettet sein, die parallel und mit Abstand zu den Leitern 16 verlaufen. Es soll mindestens ein Federelement 18 vorhanden sein, das zwischen den Leitern 16 angeordnet ist. Die Leiter 16 könnten bei Einsatz mindestens eines Federelements 18 In herkömmlicher Ausführung aufgebaut sein.

## Patentansprüche

1. Vorrichtung zur Signal bzw. Stromübertragung zwischen relativ zueinander bewegbaren Endstellen (6,8), zwischen denen mindestens eine in Windungen, die durch eine Umkehrstelle (13) miteinander verbunden und in einen inneren und einen äußeren Wickelbereich (11,12) aufgeteilt sind, verlaufende Flachband-Leitung (10) angeordnet Ist, welche in einer im wesentlichen kreisförmigen Kassette (K) untergebracht ist und mindestens zwei parallel und mit Abstand zueinander in eine Umhüllung aus Isoliermaterial eingebetiete elektrische Leiter (16) aufweist, bei welcher die Kassette (K) aus einem um ihre Achse drehbaren, mindestens eine der Endstellen tragenden Rotor und einem feststehenden, ebenfalls mindestens eine der Endstellen tragenden Stator besteht, die einen ringförmigen Wickelraum zur Aufnahme der Flachband-Leitung (10) zwischen sich einschließen, **dadurch gekennzeichnet,**
- **daß** die Flachband leitung (10) mindestens ein federndes Teil enthält, durch welches ihre elastische Biegefestigkeit und damit ihre Spreizkraft im Bereich der umkehrstelle (13) derart erhöht ist, daß sie die windungen der beiden von der Umkehrstelle ausgehenden Winkelbereiche aus sich heraus, ohne gesondertes Stützelement spreizt bzw. noch außen drückt, und
- **daß** das federnde Teil ein Leiter der Flachband-Leitung (10), der aus federndern, elektrisch gut leitendem Material besteht. oder ein Federelement (18) ist, das neben den Leitern parallel und mit Abstand zu denselben verlaufend in der Flachbandleitung (10) angebracht ist.

2. Vorrichtung nach Anspruch 1. **dadurch gekennzeichnet, daß** die Leiter der Flachband-Leitung (10) aus einer federnden Kuptedegierung bestehen.

3. Vorrichtung nach Anspruch 1, **dadurch gekennzeichnet, daß** die Leiter der Flachband-Leitung (10) aus einer Eisen-Kobalt-Nickel-Legierung bestehen.

4. Vorrichtung nach Anspruch 1, **dadurch gekennzeichnet, daß** die Leiter der Flachband-Leitung (10) aus einer Kupferlegierung mit geringen Mengen von Zinn, Magnesium, Silber und Phosphor als Zusätzen bestehen.

5. Vorrichtung nach Anspruch 1, **dadurch gekennzeichnet, daß** die Leiter der Flachband-Leitung (10) aus Neusilber bestehen.

6. Vorrichtung nach Anspruch 1, **dadurch gekennzeichnet, daß** die Leiter der Flachband-Leitung (10) aus Bronze bestehen.

7. Vorrichtung nach Anspruch 1, **dadurch gekennzeichnet, daß** die Leiter der Flachband-Leitung (10) aus Messing bestehen.

## Claims

1. Device for transmitting signals and / or current between end points (6,8) which can be moved relative to one another and between which at least one flat ribbon line (10) is arranged that is mounted in turns joined together by an inversion point (13) and divided into an inner and an outer winding region (11,12), which line (10) is positioned in an essentially circular cassette (K) and comprises at least two electrical conductors (16) embedded parallel to and at a distance from one another in a covering of insulating material, in which device the cassette (K) comprises a rotor, which is rotatable about its axis and carries at least one of the end points, and a stationary stator, which likewise carries at least one of the end points, which rotor and stator enclose between them an annular winding space for receiving the flat ribbon line (10), **characterized in**
- **that** the flat ribbon line (10) includes at least one resilient element by which its elastic flexural strength, and consequently its spreading force in the region of the inversion point (13) is increased such, that the windings of the two winding regions which extend from the inversion point are pressed to the outside by themselves, without a separate support element, and
- **that** the resilient element is one of the conductors of the flat ribbon line (10), which consists of a resilient material with good electrical conducting properties, or a resilient element (18), which runs parallel to and at a distance from the conductors within the flat ribbon line (10).

2. Device according to claim 1, **characterized in that** the conductors of the flat ribbon line (10) consist of a resilient copper alloy.

3. Device according to claim 1, **characterized in that** the conductors of the flat ribbon line (10) consist of an iron-cobalt-nickel alloy.

4. Device according to claim 1, **characterized in that** the conductors of the flat ribbon line (10) consist of a copper alloy with small amounts of tin, magnesium, silver and phosphorus as additives.

5. Device according to claim 1, **characterized in that** the conductors of the flat ribbon cable (10) consist of new silver.

6. Device according to Claim 1, **characterized in that** the conductors of the flat ribbon line (10) consist of bronze.

7. Device according to claim 1, **characterized in that** the conductors of the flat ribbon cable (10) consist of brass.

## Revendications

1. Dispositif de transmission de signaux ou de courant entre des emplacements d'extrémité (6, 8) aptes à se déplacer l'un par rapport à l'autre et entre lesquels est disposé au moins un ensemble (10) de conducteurs en ruban plat s'étendant en enroulements reliés l'un à l'autre et divisé en une partie intérieure et une partie extérieure d'enroulement (11, 12) par un emplacement d'inversion (13), l'ensemble de conducteurs en ruban plat étant placé dans une cassette (K) de forme essentiellement circulaire et présentant au moins deux conducteurs électriques (16) incorporés parallelement l'un à l'autre et à distance l'un de l'autre dans une enveloppe en matériau isolant, la cassette (K) étant constituée d'un rotor apte à tourner autour de son axe et portant au moins un des emplacements d'extrémité et d'un stator fixe qui porte également au moins un des emplacements d'extrémité, le stator et le rotor enfermant entre eux un espace annulaire d'enroulement qui reprend l'ensemble (10) de conducteurs en ruban plat,
**caractérisé en ce que**
- l'ensemble (10) de conducteurs en ruban plat contient au moins une partie élastique qui augmente sa tenue à la flexion élastique et donc sa capacité d'étalement dans la zone occupée par l'emplacement d'inversion (13), de telle sorte qu'il étale et repousse vers l'extérieur l'un de l'autre et sans élément spécial de soutien les enroulements des deux parties d'enroulement partant de l'emplacement d'inversion et
- **en ce que** la partie élastique est un conducteur de l'ensemble (10) de conducteurs en ruban plat qui est constitué d'un matériau élastique et bon conducteur électrique ou un élément élastique (18) qui est placé parallelement à l'ensemble (10) de conducteurs en ruban plat, à côté des conducteurs et à distance de ces derniers.

2. Dispositif selon la revendication 1, **caractérisé en ce que** les conducteurs de l'ensemble (10) de conducteurs en ruban plat sont constitués d'un alliage élastique de cuivre.

3. Dispositif selon la revendication 1, **caractérisé en ce que** les conducteurs de l'ensemble (10) de conducteurs en ruban plat sont constitués d'un alliage de fer, de cobalt et de nickel.

4. Dispositif selon la revendication 1, **caractérisé en ce que** les conducteurs de l'ensemble (10) de conducteurs en ruban plat sont constitués d'un alliage de cuivre additionné d'une petite quantité d'étain, de magnésium, d'argent et de phosphore.

5. Dispositif selon la revendication 1, **caractérisé en ce que** les conducteurs de l'ensemble (10) de conducteurs en ruban plat sont constitués d'argentan.

6. Dispositif selon la revendication 1, **caractérisé en ce que** les conducteurs de l'ensemble (10) de conducteurs en ruban plat sont constitués de bronze.

7. Dispositif selon la revendication 1, **caractérisé en ce que** les conducteurs de l'ensemble (10) de conducteurs en ruban plat sont constitués de laiton.
